# EUROPÄISCHE PATENTSCHRIFT

(11) **EP 3 800 078 B1**
(45) Veröffentlichungstag und Bekanntmachung des Hinweises auf die Patenterteilung: **07.06.2023**
(21) Anmeldenummer: 20199565.1
(22) Anmeldetag: 01.10.2020
(51) Int. Cl.: B60J 1/17, E05F 11/52, E05F 11/38

(54) **FLÄCHENBÜNDIGE FENSTERSCHEIBE FÜR EIN KRAFTFAHRZEUG**
FLUSH WINDOW PANE FOR A MOTOR VEHICLE
PANNEAU DE FENÊTRE À FLEUR POUR UN VÉHICULE AUTOMOBILE

(30) Priorität: 01.10.2019 DE 102019126504
(43) Veröffentlichungstag der Anmeldung: 07.04.2021
(73) Patentinhaber: Ertl, Harald, 82223 Eichenau (DE)
(72) Erfinder: Ertl, Harald, 82223 Eichenau (DE); Kaiser, Tobias, 80639 München (DE)
(74) Vertreter: Grünecker Patent- und Rechtsanwälte PartG mbB

(56) Entgegenhaltungen:
- EP-A1- 3 241 697
- WO-A1-2019/141836
- DE-A1- 2 435 766
- US-A- 4 575 967

## Beschreibung

Die vorliegende Erfindung betrifft ein zukunftsweisendes Türkonzept für ein Kraftfahrzeug, insbesondere eine Fahrzeugtür mit einer von einer verschiebbaren Fensterscheibe verschließbaren Fensteröffnung, wobei die verschiebbare Fensterscheibe derart in zwei Führungsschienen geführt ist, dass sie in einer im Wesentlichen vertikal verlaufenden Schließbewegung von einer unteren Offenstellung in eine obere Schließstellung überführbar ist und in der oberen Schließstellung an allen Ränder flächenbündig zu der die Fensteröffnung umgebenden Fahrzeugkarosserie angeordnet ist, und wobei die Führungsschienen derart ausgestaltet sind, dass die verschiebbare Fensterscheibe während der Schließbewegung translatorisch in Richtung aus dem Fahrzeuginneren zur Fahrzeugaußenseite heraus bewegt wird.

Eine derartige Fahrzeugtür mit einer Fensterscheibe ist beispielsweise aus der EP 0 479 522 A2 bekannt. Bei dieser Fensterscheibe handelt es sich um die Fensterscheibe der vorderen Seitentür eines Pkws, die an ihrem vorderen Seitenrand dem Verlauf der Windschutzscheibe folgt und daher bis zu einer gewissen Höhe, die etwa einem Drittel der Höhe der Fensterscheibe entspricht, vertikal verläuft und dann dem schrägen Verlauf der Windschutzscheibe folgt. Diese Fensterscheibe weist an ihrem vorderen und ihrem hinteren Seitenrand jeweils zwei Mitnehmer auf, wobei der erste Mitnehmer an jedem Seitenrand an einem unteren, dem Türschacht zugewandten Bereich an der Fensterscheibe befestigt ist. Der zweite Mitnehmer ist am vorderen Seitenrand der Fensterscheibe am Ende des vertikal verlaufenden Bereichs angeordnet. Der zweite Mitnehmer am hinteren Seitenrand der Fensterscheibe ist etwa auf der gleichen Höhe wie der zweite Mitnehmer am vorderen Seitenrand angeordnet. Diese Höhe entspricht etwa einem Drittel der Höhe der Fensterscheibe. In der Fahrzeugtür sind zwei Führungen angeordnet, wobei eine der Führungen dem vorderen Seitenrand der Fensterscheibe zugeordnet ist und die andere Führung dem hinteren Seitenrand der Fensterscheibe zugeordnet ist. Die beiden Mitnehmer jedes Seitenrands der Fensterscheibe sind jeweils in derselben Führung aufgenommen und geführt. Die Führungen weisen am oberen Ende des Türschachtes eine Abzweigung auf, die schräg nach außen zur Fahrzeugaußenseite hin verläuft. Die Mitnehmer sind derart in den Führungen geführt, dass die Fensterscheibe in der Schließstellung flächenbündig mit der Fahrzeugkarosserie angeordnet ist. Die Führungen sind derart ausgebildet, dass die Fensterscheibe beim Schließen eine Schließbewegung ausführt, in der der obere Bereich der Fensterscheibe zunächst nach oben außen geführt wird und kurz vor Erreichen der endgültigen Schließstellung um den zweiten bzw. oberen Mitnehmer von außen nach innen geschwenkt wird. Dadurch wird die Fensterscheibe im oberen Bereich von außen gegen eine im Bereich der Türöffnung angeordnete Dichtung gedrückt und im unteren Bereich von innen gegen eine Dichtung gedrückt.

Auch aus der DE 24 35 766 A1 und der DE 28 08 235 A1 sind Fahrzeugtüren mit einer verschiebbaren Fensterscheibe bekannt, in denen die Fensterscheibe in der Schließstellung flächenbündig mit der Fahrzeugkarosserie abschließt.

Ferner zeigt die EP 3 241 697 A1 einen Fensterheber zum Heben und Senken einer Scheibe eines Kraftfahrzeugs, wobei die Scheibe im geschlossenen Zustand flächenbündig mit der Fahrzeugaußenhaut abschließt. Der Fensterheber umfasst einen Antriebsmechanismus und an jeder Seite der Scheibe eine Führungsschiene sowie ein erstes Führungselement und ein zweites Führungselement. Die beiden Führungselemente sind an der Scheibe befestigt und an jeder Seite der Scheibe in einem Linearführungsabschnitt der Führungsschiene im Wesentlichen linear geführt.

Es ist die Aufgabe der vorliegenden Erfindung, eine Fahrzeugtür mit einer von einer verschiebbaren Fensterscheibe verschließbaren Fensteröffnung bereitzustellen, wobei die verschiebbare Fensterscheibe in einer Schließstellung an allen Rändern flächenbündig zu der umgebenden Fahrzeugkarosserie angeordnet sein soll, und die Fahrzeugtür einfach und gewichtsreduziert ausgebildet sein soll und insbesondere eine Bewegung von Komponenten außerhalb der Außenhaut des Fahrzeugs vermieden wird.

Hierzu ist erfindungsgemäß vorgesehen, dass die verschiebbare Fensterscheibe an beiden Seitenrändern Führungsstifte aufweist, die mit den zwei Führungsschienen zusammenwirken, wobei an mindestens einem der Seitenränder mindestens zwei Führungsstifte angeordnet sind, die in derselben Führungsschiene geführt sind und jede Führungsschiene für jeden der darin geführten Führungsstifte einen Führungskanal aufweisen, wobei einer der Führungskanäle zumindest teilweise als Vertiefung bzw. Nut in dem anderen Führungskanal ausgebildet ist.. Die verschiebbare Fensterscheibe durchläuft also keine Rotationsbewegung. Dadurch wird vermieden, dass sich die verschiebbare Fensterscheibe außerhalb der Außenfläche des Fahrzeugs bewegt. Da die verschiebbare Fensterscheibe in der oberen Schließstellung an allen Rändern flächenbündig zu der die Fensteröffnung umgebenden Fahrzeugkarosserie angeordnet ist, wird ein Innenraumgewinn auf jeder Seite des Fahrzeugs erzielt. Vorzugsweise beträgt der Innenraumgewinn ca. 3 cm auf jeder Fahrzeugseite. Die erfindungsgemäße Ausgestaltung führt zu einer einfachen Ausgestaltung der Führungen der verschiebbaren Fensterscheibe mit wenigen Bauteilen. Es wird eine Bauraum- und eine Gewichtsreduzierung erzielt. Handelt es sich bei der Fahrzeugtür um die vordere Seitentür eines Fahrzeugs, so folgt die Fensterscheibe üblicherweise dem Verlauf der Windschutzscheibe und weist daher am vorderen Seitenrand einen kurzen vertikalen Bereich auf, bevor sie schräg nach oben, dem Verlauf der Windschutzscheibe folgend, in Richtung Fahrzeugdach verläuft. In diesem Fall kann am vorderen Seitenrand der Fahrzeugscheibe nur ein Führungsstift vorgesehen sein. Am hinteren Seitenrand der Fahrzeugscheibe sind zwei Führungsstifte angeordnet, wobei einer der Führungsstifte, im folgenden unterer Führungsstift genannt, näher am unteren Rand der verschiebbaren Fensterscheibe, d.h. näher an der Scheibenunterkante angeordnet ist und der andere Führungsstift, im folgenden oberer Führungsstift genannt, näher am oberen Rand der verschiebbaren Fensterscheibe bzw. näher an der Scheibenoberkante angeordnet ist. Die Führungsstifte sind also zumindest teilweise in den Führungskanälen aufgenommen und werden während der Schließbewegung in den Führungskanälen geführt, sodass der gewünschte Verlauf der Schließbewegung erreicht wird. Da die Führungskanäle für beide an demselben Seitenrand angeordneten Führungsstifte jeweils in einer Führungsschiene ausgebildet sind, ist eine raumsparende Ausgestaltung der Führungen der verschiebbaren Fensterscheibe mit wenigen Bauteilen möglich, was wiederum zu einer Gewichtsreduzierung und geringerem Bauraumbedarf führt.

In einer weiteren vorteilhaften Ausführungsform kann vorgesehen sein, dass die Schließbewegung der verschiebbaren Fensterscheibe bei der Überführung von der unteren Offenstellung in die obere Schließstellung komplett in dem von einer Fahrzeugtürinnenseite und einer Fahrzeugtüraußenseite aufgespannten Volumen liegt. Hierdurch wird sichergestellt, dass eine Bewegung der verschiebbaren Fensterscheibe außerhalb der Fahrzeugtür vermieden wird.

Eine einfache Befestigung der Führungsstifte an der verschiebbaren Fensterscheibe kann dadurch ermöglicht werden, dass die verschiebbare Fensterscheibe an beiden Seitenrändern jeweils eine Umspritzung aufweist, an der die beiden Führungsstifte befestigt sind.

In einer weiteren Ausführungsform kann vorgesehen sein, dass jeder der Führungskanäle für die Führungsstifte einen einem oberen Rand der Fahrzeugtür zugewandten oberen Endbereich aufweist, und dass die oberen Endbereiche der Führungskanäle zumindest teilweise einen horizontalen Verlauf aufweisen. Dadurch wird die gewünschte flächenbündige Ausrichtung der verschiebbaren Fensterscheibe in der Schließstellung erzielt.

In noch einer weiteren Ausführungsform kann vorgesehen sein, dass einer der zwei Führungsstifte, die an demselben Seitenrand der verschiebbaren Fensterscheibe angeordnet sind, in einem Schlitten geführt ist, wobei der Schlitten mit der jeweiligen Führungsschiene zusammenwirkt und ein gebogenes Langloch aufweist, in dem der Führungsstift geführt ist. Durch diese Ausgestaltung kann die Auswärtsbewegung des entsprechenden Randes der Fensterscheibe am Ende der Schließbewegung einfach realisiert werden. Vorzugsweise ist jeweils der untere Führungsstift, also der näher am unteren Rand der verschiebbaren Fensterscheibe liegende Führungsstift, in dem Schlitten aufgenommen. Handelt es sich bei der Fahrzeugtür um die vordere Seitentür des Fahrzeugs, so kann, wie bereits beschrieben, am vorderen Seitenrand der Fensterscheibe nur ein Führungsstift vorgesehen sein, der dann in dem Schlitten aufgenommen ist. Durch die zwangsgeführte Bewegung in dem gebogenen Langloch am Ende der Schließbewegung kann der untere Führungsstift dann aus einem Türschacht heraus in die gewünschte Auswärtsposition bewegt werden, sodass die flächenbündige Anordnung der Fensterscheibe erreicht wird.

In noch einer Variante kann vorgesehen sein, dass der in dem Langloch des Schlittens geführte Führungsstift auch in einem Führungskanal der entsprechenden Führungsschiene geführt ist. Dadurch wird sichergestellt, dass die Relativbewegungen zwischen Schlitten und dem darin geführten Führungsstift in dem Bereich, in dem die Schließbewegung im Wesentlichen vertikal verläuft, gleich Null ist.

Um eine gute Führung des Schlittens und damit der verschiebbaren Fensterscheibe zu ermöglichen, kann ferner vorgesehen sein, dass der Schlitten Führungskonturen aufweist, die mit Führungskanälen in den Führungsschienen zusammenwirken. Zudem wird die erforderliche Gegenkraft beim Schließen der verschiebbaren Fensterscheibe gegen die Dichtungen mithilfe der Führungen gewährleistet.

Vorzugsweise kann vorgesehen sein, dass jede Führungsschiene drei Führungskanäle und jeder Schlitten drei Führungskonturen aufweist, wobei die Führungskonturen mit jeweils einem der Führungskanäle der Führungsschiene zusammenwirken. Die einzelnen Führungskonturen können dabei unterschiedliche Funktionen übernehmen, beispielsweise eine gute Führung und einen festen Sitz des Schlittens gewährleisten und Kraftübertragung bzw. Bereitstellung einer Gegenkraft zum Schließen der verschiebbaren Fensterscheibe bewirken.

Eine einfache Möglichkeit zur Einbringung der zum Öffnen und Schließen der verschiebbaren Fensterscheibe benötigten Kraft, die zu einer robusten und platzsparenden Ausgestaltung führt, kann dadurch realisiert werden, dass jeder Schlitten mit einem Fensterhebermechanismus verbunden ist. Der Fensterhebermechanismus kann beispielsweise mit einer der Führungskonturen an dem jeweiligen Schlitten verbunden sein.

Noch eine weitere Ausführungsform kann vorsehen, dass die Fahrzeugtür einen Türschacht aufweist, in dem die verschiebbare Fensterscheibe zumindest in der unteren Offenstellung angeordnet ist, wobei der Türschacht an seiner der Fensteröffnung zugewandten Seite eine innere und eine äußere Türschachtdichtung aufweist, die auf verschiedenen Seiten der verschiebbaren Fensterscheibe anliegen. Durch diese Dichtungen wird die Fensterscheibe während der Schließbewegung bzw. während der Öffnungsbewegung zusätzlich geführt und stabilisiert. Es kann sichergestellt werden, dass der jeweils obere Führungsstift, also der wie bereits beschrieben an der Scheibenoberkante gelegene Führungsstift, an dem nach außen gebogenen oberen Endbereich des Führungskanals für den unteren Führungsstift vorbeigeführt wird.

Es kann auch vorgesehen sein, dass die Fahrzeugtür ferner einen Sonnenschutz umfasst, der mittels in Führungskanälen geführten Führungselementen in einer im Wesentlichen vertikal verlaufenden Schließbewegung von einer unteren Offenstellung in eine obere Schließstellung überführbar ist, wobei die Führungskanäle in den Führungsschienen ausgebildet sind. Als Sonnenschutz kann ein Sonnenschutzrollo vorgesehen sein, dass gleichzeitig mit der Fensterscheibe geöffnet und geschlossen werden kann. Dadurch wird eine platzsparende und gewichtsreduzierte Ausgestaltung ermöglicht. Der Sonnenschutz kann wahlweise starr sein, beispielsweise eine Kunststoffplatte, oder auch flexibel und dann beispielsweise durch Gewebe ausgebildet sein.

Vorzugsweise kann die verschiebbare Fensterscheibe mit den Führungsstiften und den die Führungsstifte führenden Führungsschienen als Bausatz ausgebildet sein, der von der Fahrzeugaußenseite her in die Fahrzeugtür einsetzbar ist. Eine Montagezugänglichkeit der innerhalb des Türkörpers liegenden Komponenten wird durch eine aufgesetzte und demontierbare Türaußenfläche gewährleistet. Hierdurch wird eine Montageoptimierung erzielt. Das Türsystem kann bis auf die aufgesetzte Türaußenfläche bereits vormontiert und justiert geliefert werden. Dadurch muss nur die aufgesetzte Türaußenfläche einen Lackierprozess durchlaufen. Dies ermöglicht ferner, dass die Türinnenseite durch eine geschlossene Komponente ausgebildet werden kann. Dadurch entfallen die Montageöffnungen an der Türrohbauinnenkomponente, wodurch die Akustik verbessert wird. Die Türinnenseite kann aus Kunststoff gefertigt werden, wodurch eine Substitution von Interieurelementen, oberhalb und unterhalb der Türbrüstung möglich ist.

Im Folgenden wird die Erfindung anhand von Zeichnungen näher erläutert. Es zeigen:
Fig. 1: erfindungsgemäß ausgestaltete Fahrzeugtür mit einer verschiebbaren Fensterscheibe und einer feststehenden Fensterscheibe,
Fig. 2: Schnitt durch die Fahrzeugtür aus Fig. 1 entlang der Linie II-II,
Fig. 3: Schnitt durch den oberen Bereich des Türschachts der Fahrzeugtür aus Fig. 1 entlang der Linie III-III,
Fig. 4: Schnitt durch den dem Fahrzeugdach zugewandten Bereich der Fahrzeugtür aus Fig. 1 entlang der Linie IV-IV,
Fig. 5: Schnitt durch die B-Säule mit der daran anliegenden Fahrzeugtür gemäß Fig. 1 entlang der Linie V-V,
Fig. 6: Schnitt durch den Fenstersteg der Fahrzeugtür aus Fig. 1 entlang der Linie VI-VI,
Fig. 7: perspektivische Darstellung der Fensterheber-Gruppe mit der Fensterscheibe der Fahrzeugtür aus Fig. 1,
Fig. 8: perspektivische Darstellung der Fensterscheibe der Fensterheber-Gruppe aus Fig. 7,
Fig. 9: perspektivische Darstellung einer Führungsschiene der Fensterheber-Gruppe aus Fig. 7,
Fig. 10: weitere perspektivische Darstellung der Führungsschiene aus Fig. 9,
Fig. 11: vergrößerte Darstellung eines unteren Führungsstifts der Fensterscheibe aus Fig. 8,
Fig. 12: vergrößerte Darstellung eines oberen Führungsstifts der Fensterscheibe aus Fig. 8,
Fig. 13: perspektivische Darstellung eines Schlittens zur Aufnahme eines unteren Führungsstifts der Fensterscheibe aus Fig. 8, und
Fig. 14a-c: Darstellung der Bewegungen zwischen Führungsschiene, Schlitten und unterem Führungsstift während der Schließbewegung der Fensterscheibe.

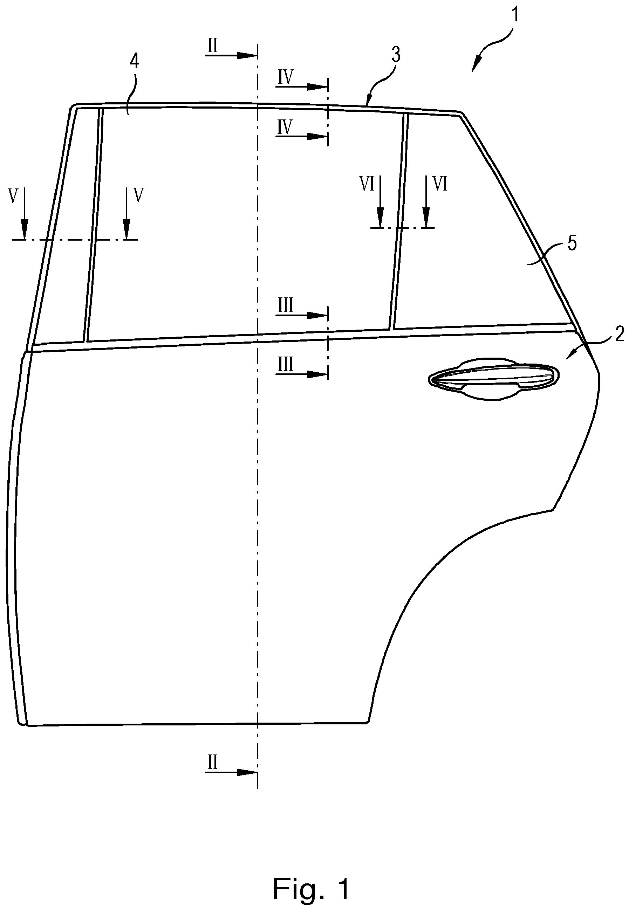

Fig. 1 zeigt eine perspektivische Darstellung einer erfindungsgemäßen Fahrzeugtür 1. Bei der dargestellten Fahrzeugtür 1 handelt es sich um eine hintere Seitentür, die zwischen B-Säule und C-Säule des Fahrzeugs angeordnet ist. Die Fahrzeugtür 1 umfasst einen Türrahmen 2 in dem eine Fensteröffnung 3 ausbildet ist. In der Fensteröffnung 3 sind eine verschiebbare Fensterscheibe 4 und eine feststehende Fensterscheibe 5 angeordnet. Die verschiebbare Fensterscheibe 4 ist Teil einer Fensterheberbaugruppe und kann aus der dargestellten oberen Schließstellung, in der die verschiebbare Fensterscheibe 4 an allen Rändern flächenbündig zur umgebenden Autokarosserie (in Fig. 1 nicht dargestellt) angeordnet ist, in eine untere Offenstellung verschoben werden. In der unteren Offenstellung ist die verschiebbare Fensterscheibe 4 komplett in einem Türschacht in der Fahrzeugtür 1 aufgenommen.

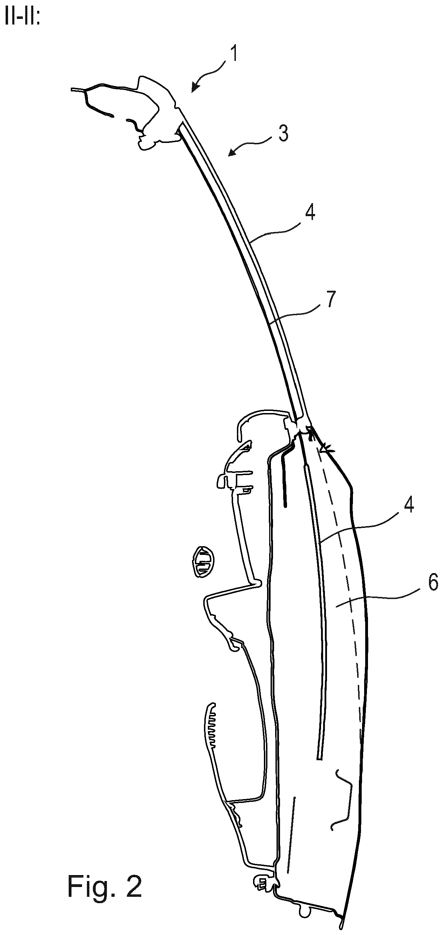

Fig. 2 zeigt einen Schnitt durch die Fahrzeugtür 1 entlang der Linie II-II aus Fig. 1. Wie bereits beschrieben, ist in der Fahrzeugtür 1 die Fensteröffnung 3 ausgebildet, die mit der verschiebbaren Fensterscheibe 4 verschließbar ist. In Fig. 2 ist die verschiebbare Fensterscheibe 4 sowohl in der oberen Schließstellung, in der sie die Fensteröffnung 3 überdeckt, als auch in der unteren Offenstellung gezeigt. In der unteren Offenstellung ist die verschiebbare Fensterscheibe 4 komplett im Türschacht 6 der Fahrzeugtür 1 aufgenommen. Mithilfe weiterer Bauteile der Fensterheberbaugruppe, die im Folgenden noch näher beschrieben werden, kann die verschiebbare Fensterscheibe 4 in einer im Wesentlichen vertikal verlaufenden Schließbewegung aus der unteren Offenstellung in die obere Schließstellung und umgekehrt überführt. In Fig. 2 ist die Öffnungs- und Schließkurve 7 dargestellt, die die verschiebbare Fensterscheibe 4 bei der Überführung aus der unteren Offenstellung in die obere Schließstellung und umgekehrt durchläuft. Die Schließbewegung verläuft zunächst im Wesentlichen vertikal. Die verschiebbare Fensterscheibe 4 wird also entlang der Öffnungs- und Schließkurve 7 nach oben aus dem Türschacht 6 heraus bewegt. Wenn die verschiebbare Fensterscheibe 4 etwa auf Höhe der Fensteröffnung 3 angeordnet ist, wenn also der obere Rand 13 der Fensterscheibe 4 nahe des oberen Randes der Fensteröffnung 3 angeordnet ist und der untere Rand 10 der Fensterscheibe 4 nahe des unteren Randes der Fensteröffnung 3 angeordnet ist, wird die Fensterscheibe 4 sowohl im oberen als auch im unteren Bereich in einer zumindest teilweise horizontal verlaufenden Bewegung translatorisch nach außen zur Fahrzeugaußenseite hin hinbewegt, bis die verschiebbare Fensterscheibe 4 in der dargestellten Endposition, der oberen Schließstellung, angeordnet ist. In dieser oberen Schließstellung ist die verschiebbare Fensterscheibe 4 flächenbündig zur der umgebenden Fahrzeugkarosserie angeordnet.

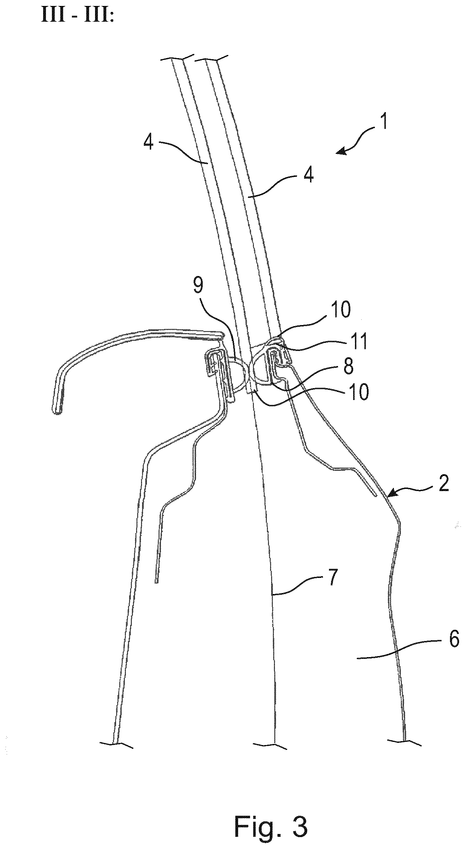

Fig. 3 zeigt einen Schnitt durch den oberen Bereich des Türschachts 6 der Fahrzeugtür 1 aus Fig. 1 entlang der Linie III-III. In Fig. 3 ist die verschiebbare Fensterscheibe 4 ebenfalls in zwei unterschiedlichen Positionen gezeigt. Die in Fig. 3 rechte Darstellung zeigt die verschiebbare Fensterscheibe 4 in der oberen Schließstellung, die linke Darstellung zeigt die verschiebbare Fensterscheibe 4 gegen Ende der Schließbewegung, bzw. am Anfang der Öffnungsbewegung, wenn der untere Rand 10 der verschiebbaren Fensterscheibe 4 noch in Eingriff mit einer äußeren Türschachtdichtung 8 und mit einer inneren Türschachtdichtung 9 steht. Dies ist die maximal innen liegende Position der verschiebbaren Fensterscheibe 4. Der Türrahmen 2 der Fahrzeugtür 1 bildet den Türschacht 6 aus, in den die verschiebbare Fensterscheibe 4 versenkt werden kann. Am oberen Rand des Türschacht 6 sind auf den Türrahmen 2 die äußere Türschachtdichtung 8 und die innere Türschachtdichtung 9 aufgesteckt.

In Fig. 3 ist ebenfalls ein Abschnitt der Öffnungs- bzw. Schließkurve 7 der verschiebbaren Fensterscheibe 4 dargestellt. Beim Absenken der verschiebbaren Fensterscheibe 4 wird die verschiebbare Fensterscheibe 4 durch die äußere und die innere Türschachtdichtung 8, 9 nach unten in den Türschacht 6 hinein bewegt. Die äußere und die innere Türschachtdichtung 8, 9 stützen und führen die verschiebbare Fensterscheibe 4 während der Öffnungs- und Schließbewegung und sorgen zudem dafür, dass keine Flüssigkeit in den Türschacht 6 eindringt. Wie anhand der Öffnungs- bzw. Schließkurve 7 ersichtlich, wird die verschiebbare Fensterscheibe 4 beim Schließvorgang zunächst im Wesentlichen vertikal nach oben verschoben, bis der untere Rand 10 der Fensterscheibe oberhalb der äußeren und der inneren Türschachtdichtungen 9, 10 liegt. Dann wird der untere Rand 10 der Fensterscheibe 4 in einer wesentlichen horizontalen Bewegung nach außen geschoben, also translatorisch nach außen bewegt, bis die verschiebbare Fensterscheibe 4 in der oberen Schließstellung angeordnet ist. Der Öffnungsvorgang der verschiebbaren Fensterscheibe erfolgt in umgekehrter Reihenfolge.

Wie in Fig. 3 deutlich zu sehen, ist die verschiebbare Fensterscheibe 4 in der oberen Schließstellung am unteren Rand flächenbündig mit der umgebenden Fahrzeugkarosserie angeordnet. In diesem horizontalen Randbereich bildet die äußere Türschachdichtung 8 eine Dichtung 11 für die Fensterscheibe 4 aus. Im Querschnitt ist diese Dichtung 11 in etwa tropfenförmig. Damit ist gemeint, dass die Höhe der Dichtung 11 vom Fahrzeuginneren ausgehend zunimmt. Dadurch wird das Aufschieben der verschiebbaren Fensterscheibe 4 auf die Dichtung 11 beim Schließvorgang und entsprechend auch beim Öffnungsvorgang erleichtert.

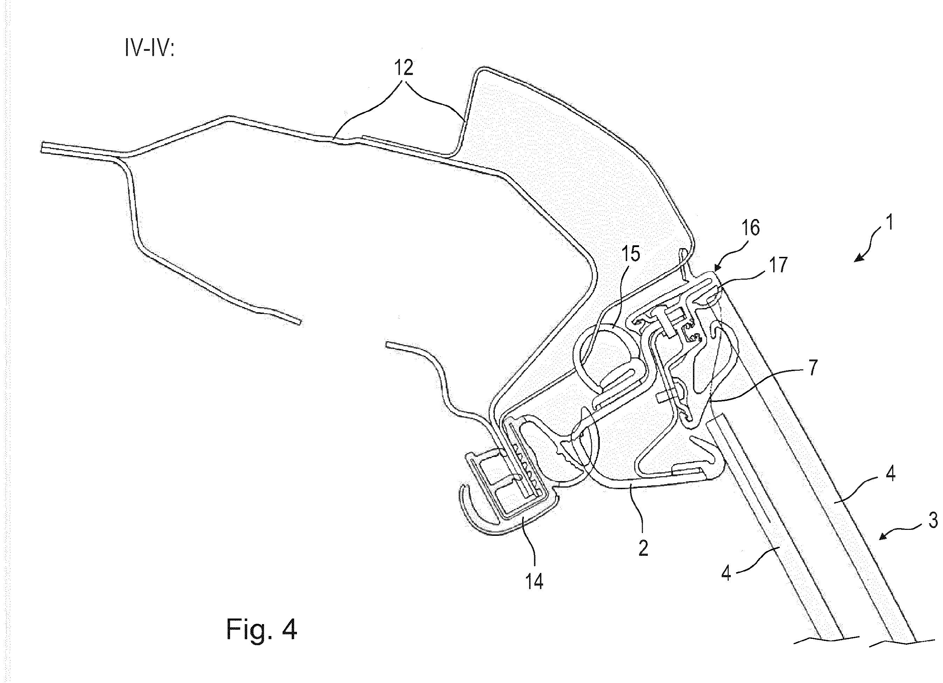

Fig. 4 zeigt einen Querschnitt durch den Bereich der Fahrzeugtür 1, der am Dach des Fahrzeugs anliegt. In Fig. 4 sind auch in Fig. 1 nicht gezeigte Teile der Fahrzeugkarosserie 12 dargestellt. Auch in Fig. 4 ist die verschiebbare Fensterscheibe 4 wieder in der oberen Schließstellung (rechte Darstellung) und in der maximal innen liegenden Position (linke Darstellung), in der sich die verschiebbare Fensterscheibe 4 während der vertikalen Öffnung-bzw. Schließbewegung befindet, gezeigt. Zudem zeigt Fig. 4 einen Abschnitt der Öffnungs- bzw. Schließkurve 7 der verschiebbaren Fensterscheibe 4. Auf die Karosserieteile 12 ist eine Dichtung 14 für die Fahrzeugtür 1 aufgesteckt. An dem Türrahmen 2 der Fahrzeugtür 1 ist eine weitere Türdichtung 15 angebracht, die im geschlossenen Zustand der Fahrzeugtür 1 an den Teilen der Fahrzeugkarosserie 12 anliegt. Im Bereich der Fensteröffnung 3 ist an dem Türrahmen 2 eine Scheibendichtung 16 befestigt. Die Scheibendichtung 16 umfasst einen tropfenförmig Dichtungsbereich 17 der horizontal am oberen Rand der Fensteröffnung 3 verläuft und an dem die verschiebbare Fensterscheibe 4 in der oberen Schließstellung anliegt. Dieser tropfenförmige Dichtungsbereich 17 hat etwa denselben Querschnitt wie die Dichtung 11 am unteren Rand der Fensteröffnung 3, die in Fig. 3 gezeigt ist. Wie bereits beschrieben, erleichtert der tropfenförmige Querschnitt der Dichtung 11 und des Dichtungsbereichs 17 die Öffnungs- bzw. Schließbewegung der verschiebbaren Fensterscheibe 4. In Fig. 4 ist deutlich zu erkennen, dass die verschiebbare Fensterscheibe 4 auch am oberen Rand der Fensteröffnung 3, an dem die Fahrzeugtür 1 in das Dach des Fahrzeugs übergeht, flächenbündig mit der umgebenden Fahrzeugkarosserie angeordnet ist.

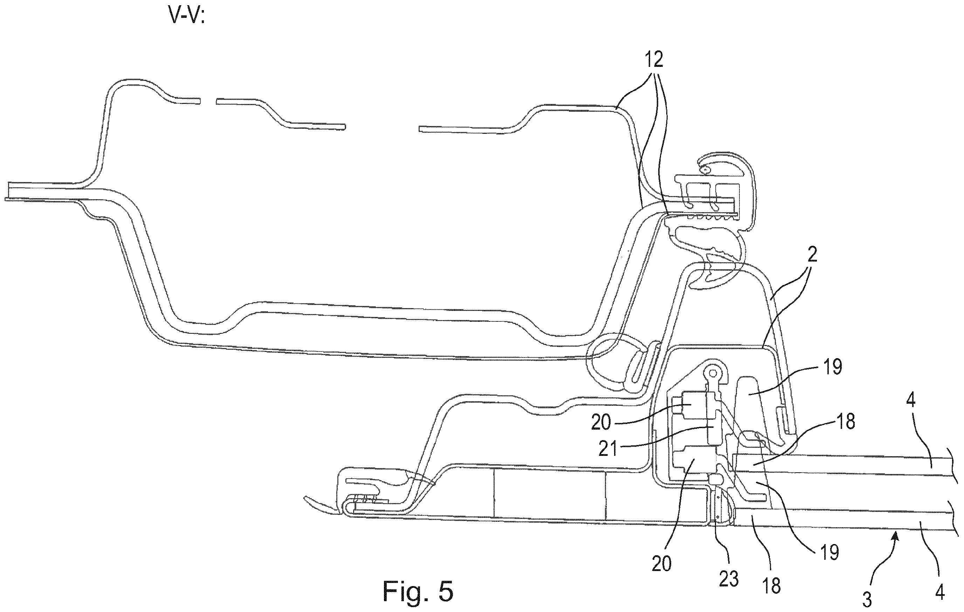

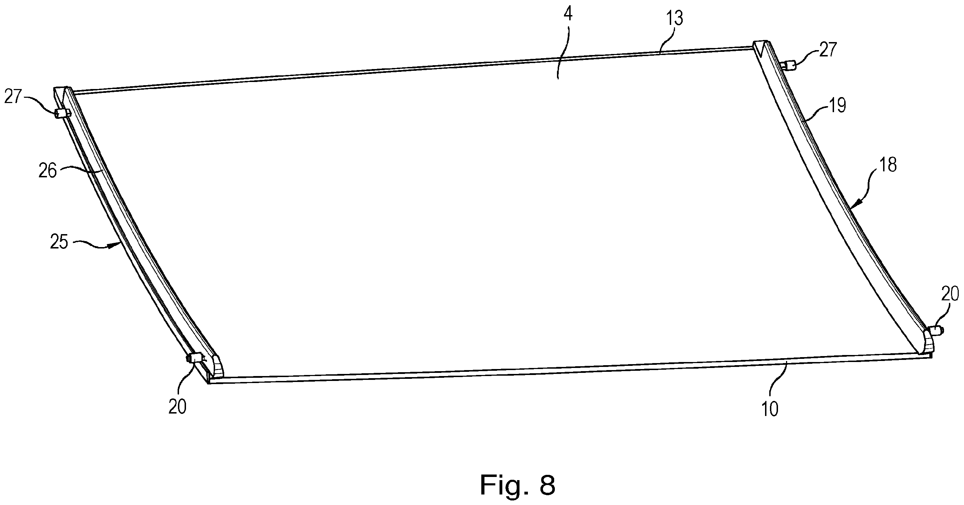

Fig. 5 zeigt einen Schnitt durch die B-Säule der Fahrzeugtür entlang der Linie V-V aus Fig. 1. Auch in Fig. 5 sind Teile der Fahrzeugkarosserie 12, die in Fig. 1 nicht gezeigt sind, sowie Teile des Türrahmens 2 dargestellt. Auch hier ist die verschiebbare Fensterscheibe 4 wieder in der oberen Schließstellung (untere Position) und in der maximal innen liegenden Stellung während des Öffnungs- bzw. Schließvorgangs (obere Position) dargestellt. Die verschiebbare Fensterscheibe 4 weist an ihrem vorderen Seitenrand 18 eine Umspritzung 19 auf. In dieser Umspritzung 19 ist benachbart zum unteren Rand 10 der verschiebbaren Fensterscheibe 4 ein Führungsstift 20 befestigt, der im Folgenden nur noch untere Führungsstift 20 genannt wird.. Der untere Führungsstift 20 erstreckt sich vom vorderen Seitenrand 18 der Fensterscheibe 4 nach außen, das heißt in Richtung Motorhaube. Der untere Führungsstift 20 ist in einem Schlitten 21 geführt. Dabei erstreckt sich der untere Führungsstift 20 durch den Schlitten 21 hindurch und liegt ferner an einer vorderen Führungsschiene 22 an und wird durch diese vordere Führungsschiene 22 geführt. Die vordere Führungsschiene 22 ist seitlich neben der verschiebbaren Fensterscheibe 4 angeordnet. Der Schlitten 21 wird ebenfalls durch die vordere Führungsschiene 22 geführt. Dazu weist der Schlitten 21 Führungskonturen auf, die in der vorderen Führungsschiene 22 geführt sind. Die genaue Ausgestaltung des Schlittens 21 und der Führungsschiene 22 sowie die Bewegung der verschiebbaren Fensterscheibe 4 wird im Folgenden, insbesondere in Bezug auf die Figuren 8 bis 14, noch näher beschrieben.

Am vorderen Seitenrand der Fensteröffnung 3 ist eine weitere Dichtung 23 angeordnet. Die Dichtung 23 weist wiederum einen tropfenförmigen Querschnitt auf, der in etwa der Querschnittsform der Dichtung 11 aus Fig. 3 bzw. des Dichtungsbereichs 17 aus Fig. 4 entspricht. Wie bereits beschrieben, wird dadurch die Bewegung der verschiebbaren Fensterscheibe 4 in die obere Schließstellung und aus der oberen Schließstellung in die untere Offenstellung erleichtert. Fig. 5 zeigt, dass die verschiebbare Fensterscheibe 4 in der oberen Schließstellung auch am vorderen Seitenrand 18, also dem der Motorhaube zugewandten Seitenrand, flächenbündig mit der umgebenden Fahrzeugkarosserie 12 angeordnet ist.

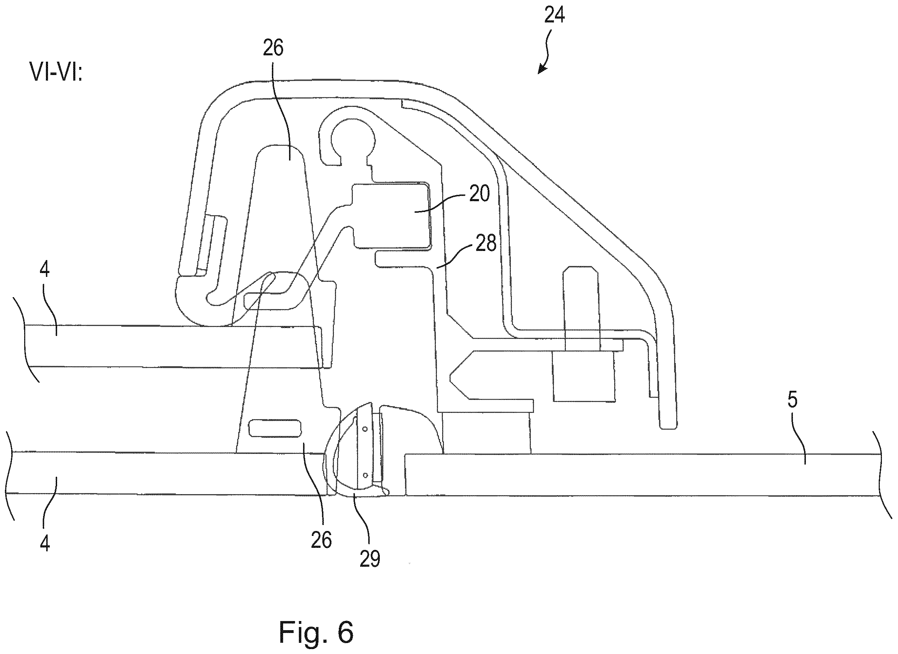

Fig. 6 zeigt einen Schnitt durch den Fenstersteg 24 der Fahrzeugtür 1 entlang der Linie VI-VI aus Fig. 1. Die verschiebbare Fensterscheibe 4 ist wieder in der oberen Schließstellung (untere Position) und in der maximal innen liegenden Stellung während des Öffnungs- bzw. Schließvorgangs (obere Position) dargestellt. Die verschiebbare Fensterscheibe 4 weist auch an ihrem hinteren Seitenrand 25, d.h. dem der feststehenden Fensterscheibe 5 zugewandten Rand, eine Umspritzung 26 auf. An der Umspritzung 26 ist ebenfalls ein unterer Führungsstift 20 befestigt. Der untere Führungsstift 20 erstreckt sich weg vom hinteren Seitenrand 25 der verschiebbaren Fensterscheibe 4 in Richtung zum Fahrzeugheck. Der untere Führungsstift 20 ist verschiebbar in einer hinteren Führungsschiene 28 geführt. An der feststehenden Fensterscheibe 5 ist eine Dichtung 29 angeordnet, an der die verschiebbare Fensterscheibe 4 in der oberen Schließstellung anliegt. Diese Dichtung 29 ist im Querschnitt wieder tropfenförmig, ebenso wie die Dichtung 11 aus Fig. 3, der tropfenförmige Dichtungsbereich 17 aus Fig. 4 und die Dichtung 23 aus Fig. 5, und weist daher die bereits beschriebenen Vorteile auf. Vorzugsweise sind die Dichtung 11, der tropfenförmige Dichtungsbereich 17, die Dichtung 23 und die Dichtung 29 einstückig ausgebildet. Somit ist also die Fensteröffnung 3 komplett von einer tropfenförmigen Dichtung für die verschiebbare Fensterscheibe 4 umgeben. Fig. 6 zeigt ferner, dass die verschiebbare Fensterscheibe 4 in der oberen Schließstellung auch am hinteren Seitenrand, also dem dem Fahrzeugheck zugewandten Seitenrand, flächenbündig mit der umgebenden Fahrzeugkarosserie ausgebildet ist.

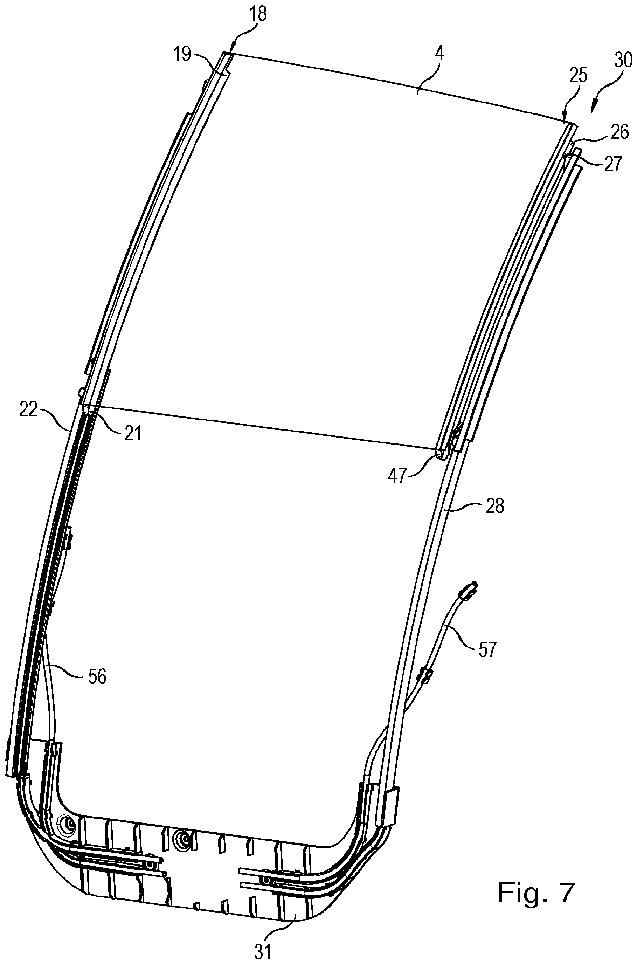

Fig. 7 zeigt eine perspektivische Darstellung der Fensterheberbaugruppe 30 für die Fahrzeugtür 1 aus Fig. 1. Die Fensterheberbaugruppe 30 umfasst die vordere Führungsschiene 22, die hintere Führungsschiene 28, die in der vorderen Führungsschiene 22 und der hinteren Führungsschiene 28 geführte, verschiebbare Fensterscheibe 4 mit den für die Verschiebung notwendigen Mitteln wie den Führungsstiften und den Schlitten, sowie einen Quersteg 31, der die Führungsschienen 2 20, 28 an ihren unteren Enden miteinander verbindet und an dem ein Motor zum Öffnen und Schließen der verschiebbaren Fensterscheibe 4 anbringbar ist, und entsprechende Mittel um die Kraft des Motors auf die Fensterscheibe zu übertragen. Die verschiebbare Fensterscheibe 4 weist an ihrem vorderen Seitenrand 18 eine Umspritzung 19 auf und an ihrem hinteren Seitenrand 25 eine identisch ausgebildete Umspritzung 26. An beiden Umspritzungen 19, 26 ist jeweils ein unterer Führungsstift, der in Fig. 7 von anderen Komponenten verdeckt ist, und ein oberer Führungsstift 27 befestigt. Der obere Führungsstift 27 ist der Führungsstift, der näher am oberen Rand der verschiebbaren Fensterscheibe 4 angeordnet ist und wird im Folgenden nur noch oberer Führungsstift 27 genannt. Die beiden unteren Führungsstifte sind jeweils in einem Schlitten 21, 47 aufgenommen, wobei der dem vorderen Seitenrand 18 der verschiebbaren Fensterscheibe 4 zugeordnete vordere Schlitten 21 spiegelsymmetrisch zu dem dem hinteren Seitenrand 25 der verschiebbaren Fensterscheibe 4 zugeordneten hinteren Schlitten 47 ausgebildet ist. Anstelle des Motors sind auch andere Mittel zum Öffnen und Schließen der Fensterscheibe, beispielsweise ein manueller Fensterheber, einsetzbar.

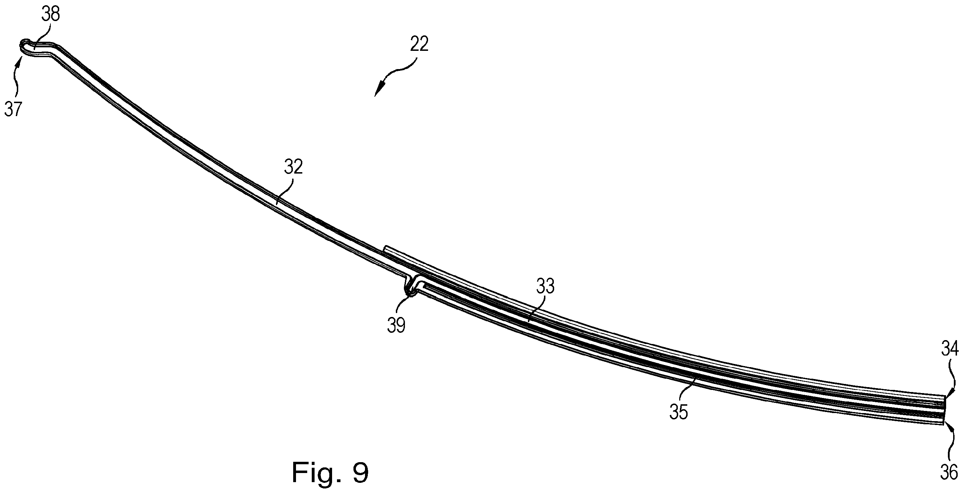

Fig. 9 zeigt eine perspektivische Darstellung der Rückseite der verschiebbaren Fensterscheibe 4, d.h. also aus dem Fahrzeuginneren heraus betrachtet. Wie bereits beschrieben, weist die verschiebbare Fensterscheibe 4 sowohl an ihrem vorderen Seitenrand 18 als auch an ihrem hinteren Seitenrand 25 jeweils eine Umspritzung 19, 26 auf. Ferner sind sowohl am vorderen Seitenrand 18 als auch am hinteren Seitenrand 25 jeweils zwei Führungsstifte, ein unterer Führungsstift 20 und ein oberer Führungsstift 27, angeordnet. Die unteren Führungsstifte 20 sind identisch zueinander ausgebildet, ebenso sind die oberen Führungsstifte 27 identisch zueinander ausgebildet. Im dargestellten Ausführungsbeispiel sind sowohl die unteren Führungsstifte 20 als auch die oberen Führungsstifte 27 jeweils an der Umspritzung 19, 26 befestigt. Der jeweils untere Führungsstift 20 ist benachbart zum unteren Rand 10 der verschiebbaren Fensterscheibe 4 angeordnet, der jeweils obere Führungsstift 27 ist benachbart zum oberen Rand 13 der verschiebbaren Fensterscheibe 4 angeordnet. Der untere Rand 10 der verschiebbaren Fensterscheibe 4, also der Rand der dem Fahrzeugboden zugewandt ist, und der obere Rand 13 der verschiebbaren Fensterscheibe 4, also der Rand der dem Fahrzeugdach zugewandt ist, sind frei.

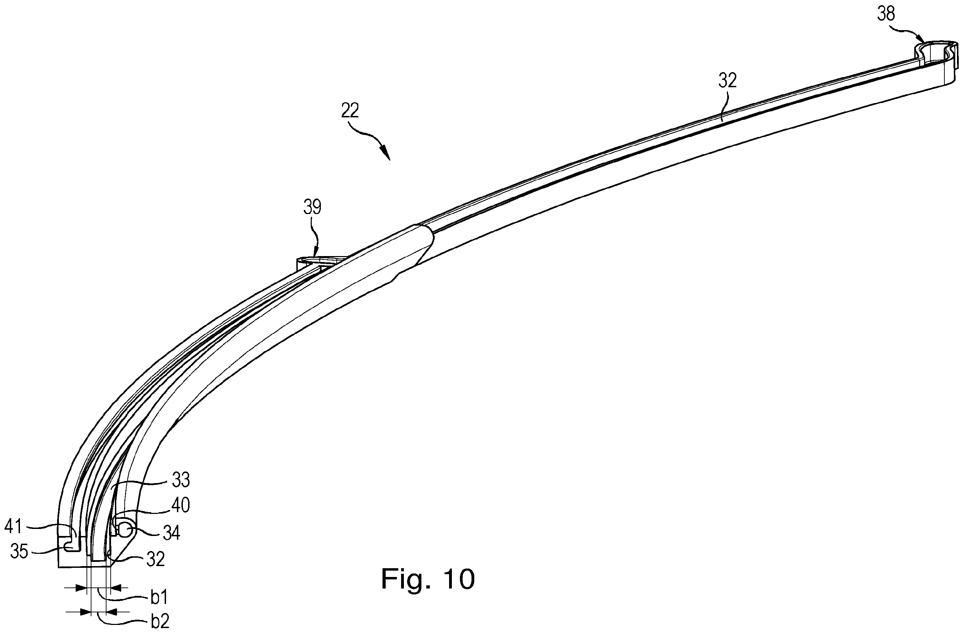

Fig. 9 und 10 zeigen eine perspektivische Darstellung der vorderen Führungsschiene 22 für die verschiebbare Fensterscheibe 4. Die hintere Führungsschiene 28 ist spiegelsymmetrisch zur vorderen Führungsschiene 22 ausgebildet. Die folgende Beschreibung gilt auch für die hintere Führungsschiene 28, wobei alle Bauteile der hinteren Führungsschiene 28 spiegelsymmetrisch zu den Bauteilen der vorderen Führungsschiene 22 ausgebildet sind.

Die Führungsschiene 22 ist als Hohlprofil ausgebildet und weist vier Führungskanäle 32, 33, 34, 35 auf. Der erste Führungskanal 32 erstreckt sich von einem unteren Ende 36 der Führungsschiene 22 bis zu einem oberen Ende 37 der Führungsschiene 22 und somit über die gesamte Länge der Führungsschiene 22. Dieser erste Führungskanal 32 dient zur Aufnahme des oberen Führungsstiftes 27, der an der verschiebbaren Fensterscheibe 4 befestigt ist. Im oberen Endbereich der Führungsschiene 22 sind der erste Führungskanal 32 und die gesamte Führungsschiene 22 nach außen gebogen. Daher sind die Führungsschiene 22 und auch der erste Führungskanal 32 in diesem oberen Endbereich 38 in etwa S-förmig. Der zweite Führungskanal 33 erstreckt sich vom unteren Ende 36 der Führungsschiene 22 bis etwa zur Mitte der Führungsschiene 22. Im eingebauten Zustand der Führungsschiene 22, wenn also die Fensterheberbaugruppe in der Fahrzeugtür 1 befestigt ist, erstreckt sich der zweite Führungskanal 33 der Führungsschiene 22 bis zum oberen Ende des Türschachtes 6. In seinem oberen Endbereich 39, also im Bereich des oberen Randes des Türschacht 6, biegt der zweite Führungskanal 33 in die gleiche Richtung wie der erste Führungskanal 32 nach außen, also zur Fahrzeugaußenseite hin, ab. Der obere Endbereich 39 des zweiten Führungskanal 33 schließt mit dem darunterliegenden Bereich des zweiten Führungskanals 33 in etwa einen rechten Winkel ein. Der obere Endbereich 39 des zweiten Führungskanal 33 verläuft daher im Wesentlichen nur horizontal, wohingegen der obere Endbereich 38 des ersten Führungskanals 32 auch noch eine gewisse vertikale Komponente aufweist. Im zusammengesetzten Zustand der Fensterheberbaugruppe ist der untere Führungsstift 20 in dem zweiten Führungskanal 33 aufgenommen. Der zweite Führungskanal 33 verläuft parallel zu dem ersten Führungskanal 32, lediglich der obere Endbereich 39 des zweiten Führungskanal 33 weicht von dem Verlauf des ersten Führungskanal 32 ab. Der parallel verlaufende Bereich des zweiten Führungskanals 33 ist als Vertiefung, bzw. Nut in dem ersten Führungskanal 32 ausgebildet.

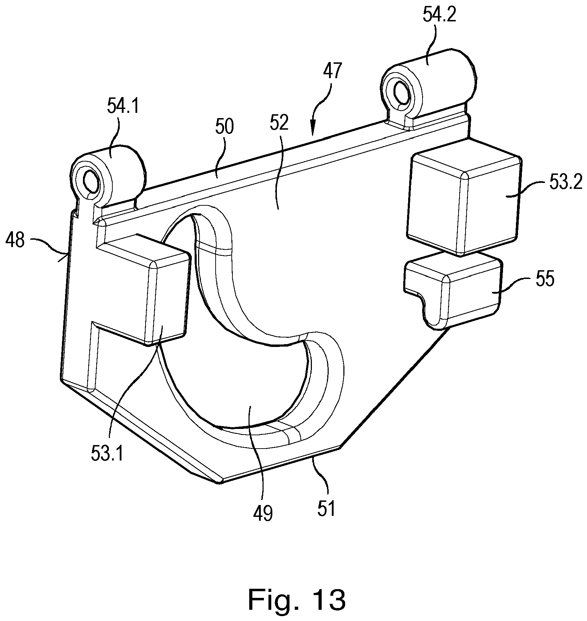

Ein dritter Führungskanal 34 ist neben dem ersten und dem zweiten Führungskanal 32, 33 ausgebildet und ist etwas länger als der zweite Führungskanal 33. Im zusammengesetzten Zustand der Fensterheberbaugruppe ist in dem dritten Führungskanal 34 eine obere Führungskontur des Schlittens 21 geführt. Ferner ist in der Führungsschiene 22 noch ein vierter Führungskanal 35 ausgebildet. Der vierte Führungskanal 35 ist im zusammengesetzten Zustand der Fensterheberbaugruppe unterhalb der drei anderen Führungskanäle 32, 33, 34 ausgebildet und endet kurz vor dem abgebogenen oberen Endbereich 39 des zweiten Führungskanals 33. Im zusammengesetzten Zustand der Fensterheberbaugruppe ist in dem vierten Führungskanal 35 eine weitere, L-förmige, Führungskontur des Schlittens 21 aufgenommen. Der Schlitten 21 wird im Folgenden mit Bezug auf Fig. 13 näher beschrieben. Wie in Fig. 10 deutlich zu sehen ist, weist der erste Führungskanal 32 etwa einen rechteckigen Querschnitt auf. Der zweite Führungskanal 33 ist im Boden des ersten Führungskanal 32 ausgebildet, stellt also eine Vertiefung des ersten Führungskanal 32 dar. Der zweite Führungskanal 33 ist im Querschnitt ebenfalls im Wesentlichen rechteckig, wobei die Breite b2 des zweiten Führungskanal 33 kleiner ist als die Breite b1 des ersten Führungskanal 32. Sowohl der erste Führungskanal 32 als auch der zweite Führungskanal 33 sind auf ihrer in Fig. 10 oberen Seite offen, sodass die Führungsstifte 20, 27 in den beiden Führungskanälen 32, 33 aufgenommen werden können. Der dritte Führungskanal 34 ist im Querschnitt im Wesentlichen kreisförmig. An seiner in Fig. 10 linken Seite ist der dritte Führungskanal 34 offen, sodass eine Führungskontur des Schlitten 21 aufgenommen werden kann. Diese Öffnung 40 des dritten Führungskanals 34 bildet eine Hinterschneidung aus, sodass die entsprechende Führungskontur des Schlittens 21 in dem dritten Führungskanal 34 gehalten wird. Der vierte Führungskanal 35 ist im Querschnitt im wesentlichen L-förmig und weist an seiner in Fig. 10 dargestellten oberen Seite ebenfalls eine Öffnung 41 auf, sodass er eine weitere Führungskontur des Schlittens 21 aufnehmen und führen kann. Die Führungsschienen 22, 28 sind als strukturversteifende Elemente ausgelegt und tragen zu einer Erhöhung der Tür-und Rahmensteifigkeit bei.

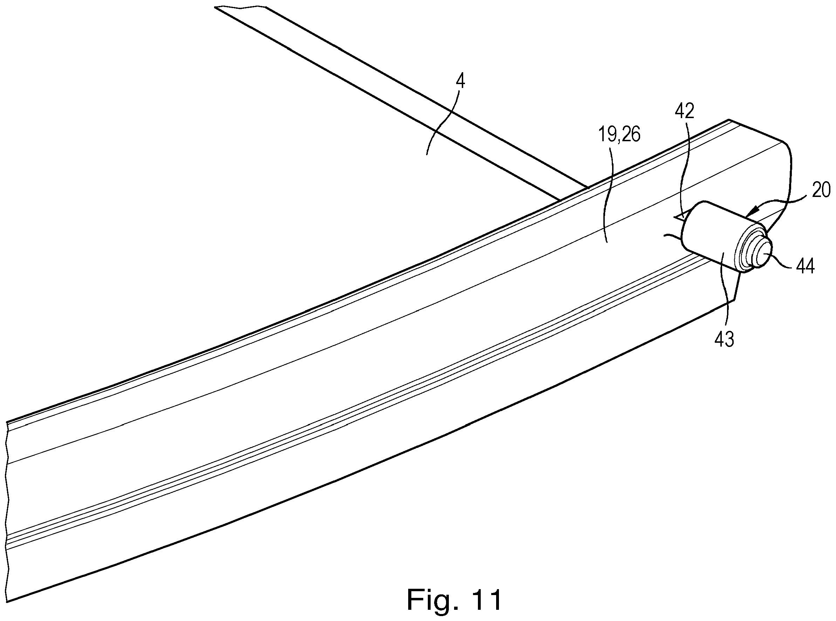

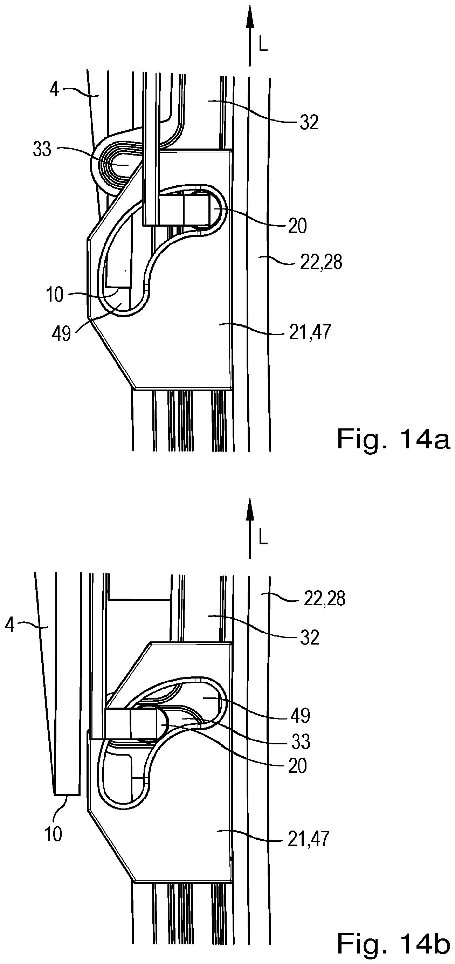

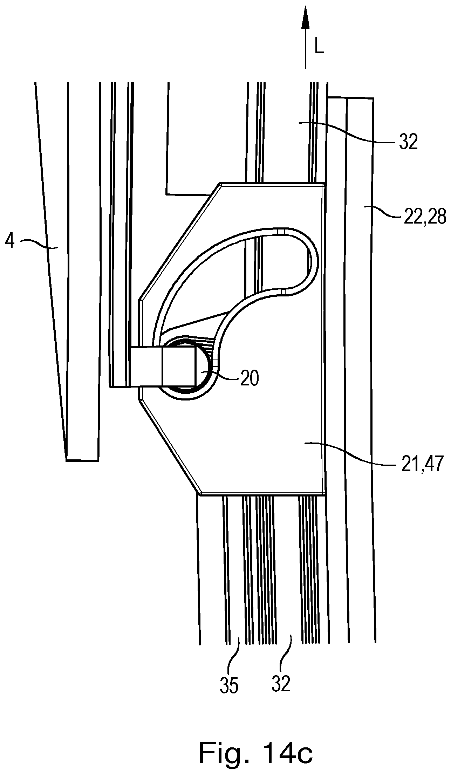

Fig. 11 zeigt eine Vergrößerung des an der Umspritzung 19, 26 der verschiebbaren Fensterscheibe 4 befestigten unteren Führungsstifts 20. Der untere Führungsstift 20 weist einen in der Umspritzung 19, 26 befestigten unteren Bereich 42 auf, wobei sich dieser untere Bereich 42 noch aus der Umspritzung 19, 26 heraus erstreckt. Der untere Bereich 42 des unteren Führungsstifts 20 hat einen rechteckigen Querschnitt. An diesen unteren Bereich 42 des unteren Führungsstifts 20 schließt sich ein mittlerer Bereich 43 des unteren Führungsstifts 20 an. Der Querschnitt des mittleren Bereichs 43 des unteren Führungsstifts 20 ist in etwa kreisförmig. An den mittleren Bereich 43 des unteren Führungsstifts 20 schließt sich ein äußerer Bereich 44 des unteren Führungsstifts 20 an. Dieser äußere Bereich 44 weist ebenfalls einen im wesentlichen kreisförmigen Querschnitt auf, wobei der Durchmesser des äußeren Bereichs 44 kleiner ist als der Durchmesser des mittleren Bereichs 43. Ferner hat der mittlere Bereich 43 die größte Länge. Der mittlere Bereich 43 des unteren Führungsstifts 20 ist im zusammengesetzten Zustand der Fensterheberbaugruppe in einem Langloch in dem Schlitten 21 angeordnet. Dies wird im Folgenden in Bezug auf die Figuren 13 und 14 noch näher erläutert. Der äußere Bereich 44 des unteren Führungsstifts 20 ist im montierten Zustand der Fensterheberbaugruppe verschiebbar in dem zweiten Führungskanal 33 angeordnet.

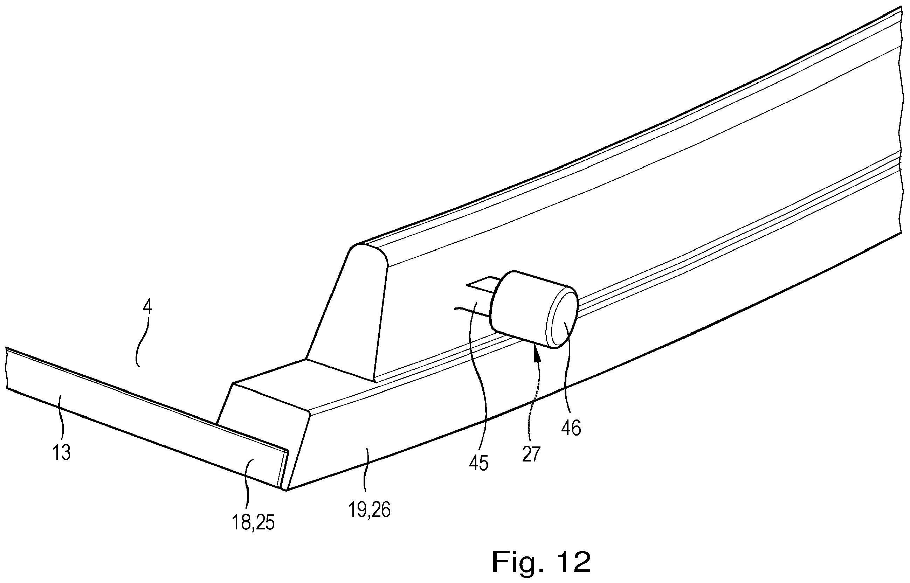

In Fig. 12 ist eine Vergrößerung des oberen Rands 13 der verschiebbaren Fensterscheibe 4 mit der daran angebrachten Umspritzung 19, 26 und dem in der Umspritzung befestigten oberen Führungsstift 27 gezeigt. Die Umspritzung 19, 26 umgibt den jeweiligen Seitenrand 18, 25 an der Seite. Die Umspritzung 19, 26 erstreckt sich ausgehend von der verschiebbaren Fensterscheibe 4 in Richtung des Fahrzeuginneren. Im Querschnitt verjüngt sich die Umspritzung 19, 26 in Richtung zum Fahrzeuginneren. Der obere Führungsstift 27 weist einen unteren Bereich 45 auf, der in der Umspritzung 19, 22 befestigt ist. Der untere Bereich 45 des oberen Führungsstifts 27 ist im Querschnitt im Wesentlichen rechteckig. An den unteren Bereich 45 des oberen Führungsstifts 27 schließt sich ein äußerer Bereich 46 des oberen Führungsstifts 27 an. Dieser äußere Bereich 46 ist im Querschnitt im Wesentlichen kreisförmig und wird verschiebbar im ersten Führungskanal 32 der entsprechenden Führungsschiene 22, 28 aufgenommen.

Fig. 13 zeigt eine perspektivische Darstellung des hinteren Schlitten 47. Wie bereits beschrieben, ist der vordere Schlitten 21 spiegelsymmetrisch zum hinteren Schlitten 47 ausgebildet, weshalb die folgende Beschreibung der einzelnen Komponenten des hinteren Schlittens 47 in spiegelsymmetrischer Ausgestaltung für den vorderen Schlitten 21 gilt. Der hintere Schlitten 47 ist im Wesentlichen plattenförmig, wobei die Platte etwa eine D-Form hat. In der Platte ist ein gebogenes Langloch 49 ausgebildet. Das gebogene Langloch 49 ist in etwa viertelkreisförmig. Das gebogene Langloch 49 erstreckt sich von einem hinteren Rand 50 des Schlittens 47 viertelkreisförmig zu einem vorderen Rand 51 des Schlittens 47. Dabei ist der hintere Rand 50 des Schlittens 47 im zusammengebauten Zustand der Fensterheberbaugruppe von der verschiebbaren Fensterscheibe 4 abgewandt und der vordere Rand 51 des Schlittens 47 der verschiebbaren Fensterscheibe 4 zugewandt. Das gekrümmte Langloch 49 folgt dabei der D-förmigen Außenkontur des Schlittens 47. Im zusammengebauten Zustand der Fensterheberbaugruppe ist der zylindrische mittlere Bereich 43 des jeweiligen unteren Führungsstifts 20 verschiebbar in dem Langloch 49 aufgenommen. Dabei erstreckt sich der untere Führungsstift 20 durch das Langloch 49 hindurch, sodass sein äußerer Bereich 44 verschiebbar in dem zweiten Führungskanal 33 der entsprechenden Führungsschiene 22, 28 geführt ist.

Auf der Vorderseite 52 des Schlittens 47, die im zusammengebauten Zustand der Fensterheberbaugruppe der verschiebbaren Fensterscheibe 4 zugewandt ist, weist der hintere Schlitten 47 zwei zusammengehörige, erste Führungskonturen 53.1, 53.2 auf. Die beiden ersten Führungskonturen 53.1, 53.2 sind jeweils am Rand des Schlittens 47 angeordnet und beabstandet zueinander. Eine der beiden ersten Führungskonturen 53.1 ist im Wesentlichen quaderförmig, die andere erste Führungskontur 53.2 ist würfelförmig. Im zusammengebauten Zustand der Fensterheberbaugruppe sind die ersten Führungskonturen 53.1, 53.2 des Schlitten 47 verschiebbar in dem ersten Führungskanal 32 der entsprechenden Führungsschiene 22, 28 aufgenommen. Die ersten Führungskonturen 53.1, 53.2 haben die Funktion der Kraftübertragung während des Schließprozesses am unteren Führungsstift 20.

An dem hinteren Rand 51 des Schlitten 47 sind zwei zweite Führungskonturen 54.1, 54.2 ausgebildet. Die zweiten Führungskonturen 54.1, 54.2 sind im Querschnitt im Wesentlichen kreisringförmig. Die beiden zweiten Führungskonturen 54.1, 54.2 sind ebenfalls beabstandet zueinander angeordnet und über kurze quaderförmige Abschnitte mit dem Rand 50 des Schlittens 47 verbunden. Die zweiten Führungskonturen 54.1, 54.2 sind im zusammengesetzten Zustand der Fensterheberbaugruppe verschiebbar in den dritten Führungskanälen 34 geführt. An den zweitens Führungskonturen 54.1, 54.2 werden Führungskabel 56, 57 (siehe Fig. 7) befestigt, die den Schlitten 47 mit dem Motor der Fensterheberbaugruppe verbinden und somit für die Aufbringung der Kraft für die Bewegung der verschiebbaren Fensterscheibe 4 zuständig sind.

Ferner weist der Schlitten 47 auf seiner Vorderseite 52 eine im Querschnitt-L-förmige dritte Führungskontur 55 auf. Im zusammengebauten Zustand der Fensterheberbaugruppe ist diese dritte Führungskontur 55 in dem vierten Führungskanal 35 aufgenommen. Eine von der Führungsschiene abgewandt der Rückseite 48 des hinteren Schlittens 47 ist im Wesentlichen glatt.

In den Figuren 14a bis 14c sind die Bewegungen der verschiebbaren Fensterscheibe 4 mit dem daran befestigten unteren Führungsstift 20, des entsprechenden Schlittens 21, 47 in der entsprechenden Führungsschiene 22, 28 gegen Ende der Schließbewegung dargestellt. Die Umspritzung der Fensterscheibe, an der die Führungsstifte befestigt sind, ist in den Figuren 14a bis 14c der Übersichtlichkeit halber nicht gezeigt. In Fig. 14a befindet sich die verschiebbare Fensterscheibe 4 noch in der maximal innen liegenden Position, in der sie auch in der maximalen Offenstellung ist. Der Schlitten 21, 47 wurde bereits in der Führungsschiene 22, 28 so weit nach oben bewegt, dass der untere Führungsstift 20 den Beginn des oberen Endbereichs 39 des zweiten Führungskanal 33 erreicht hat und eine weitere Bewegung des unteren Führungsstifts 20 entlang der Längsrichtung der Führungsschiene 22, 28 nicht mehr möglich ist. Dabei liegt der Führungsstift 20 noch am unteren Ende des Langlochs 49 an. Der Schlitten 47 wird dann weiter in Längsrichtung L der Führungsschiene 22, 28 bewegt, wobei die Führungskonturen 53.1, 53.2, 54.1, 54.2, 55 des Schlittens 21, 47 weiter in Längsrichtung L der Führungsschienen 22,28 in den entsprechenden Führungskanälen 32, 34, 35 der Führungsschienen 22, 28 gleiten. Der untere Führungsstift 20 kann nicht mehr entlang der Längsrichtung L der Führungsschiene 22, 28 gleiten, da sein äußerer Bereich 44 im abbiegenden Endbereich 39 zweiten Führungskanal 33 angeordnet ist. Der abbiegenden Endbereich 39 des zweiten Führungskanals 33 zwingt den unteren Führungsstift 20 bei der Schließbewegung der verschiebbaren Fensterscheibe 4 also nach außen, in Richtung zur Fahrzeugaußenseite und sorgt zudem dafür, dass unterhalb dieses Endbereichs die Relativbewegung zwischen dem Schlitten 21, 47 und dem unteren Führungsstift 20 gleich Null ist. Der untere Führungsstift 20 gleitet daher entlang des gekrümmten Langlochs 49 und wird in den im Wesentlichen horizontal verlaufenden oberen Endbereich 39 des zweiten Führungskanals 33 geschoben (siehe Fig. 14b). Dabei wird der untere Rand 10 der verschiebbaren Fensterscheibe 4 nach außen, d.h. in Richtung zur Fahrzeugaußenseite, geschoben. Gleichzeitig wird der nicht dargestellte obere Führungsstift im ersten Führungskanal 32 in Längsrichtung L der Führungsschienen 22, 28 bewegt. Da der obere Endbereich 38 des ersten Führungskanals 32 S-förmig ist und somit ebenfalls eine horizontale Komponente aufweist, wird auch der in den Figuren 14a bis 14c nicht gezeigte obere Rand der Fensterscheibe in horizontaler Richtung nach außen bewegt, sodass sich die komplette verschiebbare Seitenscheibe 4 auch in horizontaler Richtung translatorisch nach außen bewegt, bis sie in der in Fig. 14c gezeigten oberen Schließstellung in der maximalen äußeren Position, d.h. in der oberen Schließstellung angeordnet ist. In dieser oberen Schließstellung liegt der untere Führungsstift 20 an einem als Anschlag ausgebildeten Ende des oberen Endbereichs 39 des zweiten Führungskanals 33 an. Die L-förmige dritte Führungskontur 55 des Schlittens 21, 47 (siehe Fig. 13) liegt an einem als Anschlag ausgebildeten oberen Ende des vierten Führungskanals 35 an. Ebenso liegt der nicht dargestellte obere Führungsstift an einem als Anschlag ausgebildeten Ende des oberen Endes 37 des ersten Führungskanals 32 an. In dieser oberen Schließstellung ist die verschiebbaren Fensterscheibe 4 flächenbündig zu allen umliegenden Karosserieteilen angeordnet. Während des Bewegungsvorgangs, d.h. während des Öffnung- bzw. Schließvorgangs der verschiebbaren Fensterscheibe findet keine Bewegung außerhalb der Fahrzeugaußenflächen statt. Der Bewegungsvorgang findet vollständig innerhalb des Türsystems statt, wobei die verschiebbare Fensterscheibe 4 bei Beendigung des Öffnungsvorgangs, d.h. in der unteren Offenstellung, vollständig im Türsystem eingetaucht ist.

Die Bewegung der verschiebbaren Fensterscheibe wird über einen nicht dargestellten Motor realisiert. Der Motor wird dabei bevorzugt mittig an dem unteren Querträger 31 (siehe Fig. 7) befestigt. Über die in Fig. 7 gezeigten Zugkabel 56, 57 wird die Kraft des Motors auf die beiden Schlitten 21, 47 übertragen. Die Zugkabel werden dabei in dem dritten Führungskanal 34 der jeweiligen Führungsschiene 22, 28 geführt und an den entsprechenden zweiten Führungskonturen 54.1, 54.2 der Schlitten 21, 47 eingehängt. Über die Zugkabel 56, 57 wird eine Aufwärtsbewegung und eine Abwärtsbewegung auf den jeweiligen Schlitten 21, 47 übertragen, die über den unteren Führungsstift 20 die verschiebbare Fensterscheibe 4 mitziehen. Die Steuerung des Motors erfolgt dabei über einen gängigen Schalter in der Türverkleidung.

Durch die erfindungsgemäße Ausgestaltung der Dichtungen für die verschiebbare Fensterscheibe 4, d.h. der Dichtungen 11, 23, 29 und des Dichtungsbereichs 17, die die Fensteröffnung 3 vollständig umgeben und an denen die verschiebbare Fensterscheibe 4 in der oberen Schließstellung anliegt, wird das Fugenbild im Exterieur in Menge und Abmessung reduziert. Die Dichtungen 19, 33, 29 und der Dichtungsbereich 17 sind vorzugsweise als Schlauchdichtungen ausgebildet.

Da die verschiebbare Fensterscheibe mit den für die Verschiebung notwendigen Komponenten als Fensterheberbaugruppe ausgebildet ist, liegt ein geschlossener Bausatz vor. Eine Montagezugänglichkeit der innerhalb des Türkörpers liegenden Komponenten kann durch eine aufgesetzte und demontierte Türaußenfläche gewährleistet werden. Dadurch entfallen Montageöffnungen an der Türrohbauinnenkomponente, was zu einer verbesserten Akustik führt. Die Türrohbauinnenkomponente kann aus Kunststoff gefertigt werden, wodurch eine Substitution von Interieurelementen oberhalb und unterhalb der Türbrüstung möglich ist.

Die Führungsschienen können eine Führung für einen Sonnenschutz, beispielsweise ein Sonnenschutzrollo, aufweisen, wobei der Sonnenschutz während der Schließbewegung der verschiebbaren Fensterscheibe mitgeführt werden kann. Als Sonnenschutz kann eine starre Komponente, beispielsweise eine Kunststoffplatte, vorgesehen sein oder ein flexibles Bauteil, das beispielsweise aus Gewebe gefertigt sein kann Das flächenbündige Design ermöglicht durch eine Packageminimierung und die Substitution von Interieur- und Exterieurkomponenten eine hohe Gewichtsersparnis zu den bisher bekannten Türsystemen. Des Weiteren wird eine Montageoptimierung des OEMs erzielt, wobei das besagte Türsystem bis auf die aufgesetzte Türaußenfläche bereits vormontiert und justiert zugeliefert werden kann, wodurch nur die aufgesetzte Türaußenfläche einen Lackierprozess durchlaufen muss.

### Bezugszeichenliste

- 1: Fahrzeugtür
- 2: Türrahmen
- 3: Fensteröffnung
- 4: verschiebbare Fensterscheibe
- 5: feststehende Fensterscheibe
- 6: Türschacht
- 7: Öffnungs- und Schließkurve
- 8: äußere Türschachtdichtung
- 9: innere Türschachtdichtung
- 10: unterer Rand verschiebbare Fensterscheibe
- 11: Dichtung
- 12: Fahrzeugkarosserie
- 13: oberer Rand verschiebbare Fensterscheibe
- 14: Dichtung
- 15: Türdichtung
- 16: Scheibendichtung
- 17: tropfenförmiger Dichtungsbereich
- 18: vorderer Seitenrand verschiebbare Fensterscheibe
- 19: Umspritzung
- 20: untere Führungsstift
- 21: vorderer Schlitten
- 22: vordere Führungsschiene
- 23: Dichtung
- 24: Fenstersteg
- 25: hinterer Seitenrand verschiebbare Fensterscheibe
- 26: Umspritzung
- 27: oberer Führungsstift
- 28: hintere Führungsschiene
- 29: Dichtung
- 30: Fensterheberbaugruppe
- 31: Quersteg
- 32: erster Führungskanal
- 33: zweiter Führungskanal
- 34: dritter Führungskanal
- 35: vierter Führungskanal
- 36: unteres Ende Führungsschiene
- 37: oberes Ende Führungsschiene
- 38: oberer Endbereich erster Führungskanal
- 39: oberer Endbereich zweiter Führungskanal
- 40: Öffnung dritter Führungskanal
- 41: Öffnung vierter Führungskanal
- 42: unterer Bereich des unteren Führungsstifts
- 43: mittlerer Bereich des unteren Führungsstifts
- 44: äußerer Bereich des unteren Führungsstifts
- 45: unterer Bereich des oberen Führungsstifts
- 46: äußerer Bereich des oberen Führungsstifts
- 47: hinterer Schlitten
- 48: Rückseite Schlitten
- 49: Langloch
- 50: hinterer Rand Schlitten
- 51: vorderer Rand Schlitten
- 52: Vorderseite Schlitten
- 53.1, 53.2: erste Führungskonturen
- 54.1, 54.2: zweite Führungskonturen
- 55: dritte Führungskontur
- 56: Zugkabel
- 57: Zugkabel

- L: Längsrichtung der Führungsschienen

## Patentansprüche

1. Fahrzeugtür (1) mit einer von einer verschiebbaren Fensterscheibe (4) verschließbaren Fensteröffnung (3), wobei die verschiebbare Fensterscheibe (4) derart in zwei Führungsschienen (22, 28) geführt ist, dass sie in einer im Wesentlichen vertikal verlaufenden Schließbewegung von einer unteren Offenstellung in eine obere Schließstellung überführbar ist und in der oberen Schließstellung an allen Rändern flächenbündig zu der die Fensteröffnung (3) umgebenden Fahrzeugkarosserie (12) angeordnet ist, und wobei die Führungsschienen (22, 28) derart ausgestaltet sind, dass die verschiebbare Fensterscheibe (4) während der Schließbewegung translatorisch in Richtung aus dem Fahrzeuginneren zur Fahrzeugaußenseite heraus bewegt wird, wobei die verschiebbare Fensterscheibe (4) an beiden Seitenrändern (18, 25) Führungsstifte (20, 27) aufweist, die mit den zwei Führungsschienen (22, 28) zusammenwirken, wobei an mindestens einem der Seitenränder (18, 25) mindestens zwei Führungsstifte (20, 27) angeordnet sind, die jeweils in derselben Führungsschiene (22, 28) geführt sind und jede Führungsschiene (22, 28) für jeden der darin geführten Führungsstifte (20, 27) einen Führungskanal (32, 33) aufweist, **dadurch gekennzeichnet, dass** einer der Führungskanäle (33) zumindest teilweise als Vertiefung, bzw. Nut in dem anderen Führungskanal (32) ausgebildet ist.

2. Fahrzeugtür (1) nach Anspruch 1, **dadurch gekennzeichnet, dass** die Führungsschienen (22, 28) derart ausgebildet sind, dass die Schließbewegung der verschiebbaren Fensterscheibe (4) bei der Überführung von der unteren Offenstellung in die obere Schließstellung komplett in dem von einer Fahrzeugtürinnenseite und einer Fahrzeugtüraußenseite aufgespannten Volumen liegt.

3. Fahrzeugtür (1) nach Anspruch 1 oder 2, **dadurch gekennzeichnet, dass** die verschiebbare Fensterscheibe (4) an beiden Seitenrändern (18, 25) jeweils eine Umspritzung (19, 26) aufweist, an der die Führungsstifte (20, 27) befestigt sind.

4. Fahrzeugtür (1) nach einem der Ansprüche 1 bis 3, **dadurch gekennzeichnet, dass** jeder der Führungskanäle (32, 33) einen einem oberen Rand der Fahrzeugtür (1) zugewandten oberen Endbereich (38, 39) aufweist, und dass die oberen Endbereiche (38, 39) der Führungskanäle (32, 33) zumindest teilweise einen horizontalen Verlauf aufweisen.

5. Fahrzeugtür (1) nach einem der Ansprüche 1 bis 4, **dadurch gekennzeichnet, dass** einer der zwei Führungsstifte (20), die an demselben Seitenrand (18, 25) der verschiebbaren Fensterscheibe (4) angeordnet sind, in einem Schlitten (21, 47) geführt ist, wobei der Schlitten (21, 47) mit der jeweiligen Führungsschiene (22, 28) zusammenwirkt und ein Langloch (49) aufweist, in dem der Führungsstift (20) geführt ist.

6. Fahrzeugtür (1) nach Anspruch 5, **dadurch gekennzeichnet, dass** der in dem Langloch (49) des Schlittens (21, 47) geführte Führungsstift (20) auch in einem Führungskanal (33) der entsprechenden Führungsschiene (22, 28) geführt ist.

7. Fahrzeugtür (1) nach Anspruch 5 oder 6, **dadurch gekennzeichnet, dass** der Schlitten (21, 47) Führungskonturen (53.1, 53.2, 54.1, 54.2, 55) aufweist, die mit Führungskanälen (32, 34, 35) in den Führungsschienen (22, 28) zusammenwirken.

8. Fahrzeugtür (1) nach einem der Ansprüche 5 bis 7, **dadurch gekennzeichnet, dass** jede Führungsschiene (22, 28) mindestens drei Führungskanäle (32, 34, 35) aufweist und jeder Schlitten (21, 47) drei Führungskonturen (53.1, 53.2, 54.1, 54.2, 55), wobei die Führungskonturen (53.1, 53.2, 54.1, 54.2, 55) mit jeweils einem der Führungskanäle (32, 34, 35) der Führungsschiene (22, 28) zusammenwirken.

9. Fahrzeugtür nach einem der Ansprüche 5 bis 8, **dadurch gekennzeichnet, dass** jeder der Schlitten (21, 47) mit einem Fensterhebermechanismus verbunden ist.

10. Fahrzeugtür (1) nach einem der Ansprüche 1 bis 9, **dadurch gekennzeichnet, dass** in der Fahrzeugtür (1) ein Türschacht (6) ausgebildet ist, in dem die verschiebbare Fensterscheibe (4) zumindest in der unteren Offenstellung angeordnet ist, wobei der Türschacht (6) an seiner der Fensteröffnung (3) zugewandten Seite eine innere Türschachtdichtung (9) und eine äußere Türschachtdichtung (8) aufweist, die auf verschiedenen Seiten der verschiebbaren Fensterscheibe (4) anliegen.

11. Fahrzeugtür (1) nach einem der Ansprüche 1 bis 10, **dadurch gekennzeichnet, dass** an der Fensteröffnung (3) eine umlaufende ausgebildete Dichtung (11, 17, 23, 29) angeordnet ist, an der die verschiebbare Fensterscheibe (4) in der oberen Schließstellung anliegt, wobei die Höhe der Dichtung (11, 17, 23, 29) in Richtung aus dem Fahrzeuginneren zur Fahrzeugaußenseite heraus zunimmt.

12. Fahrzeugtür nach einem der Ansprüche 1 bis 11, ferner umfassend einen Sonnenschutz der mittels in Führungskanälen geführten Führungselementen in einer im Wesentlichen vertikal verlaufenden Schließbewegung von einer unteren Offenstellung in eine obere Schließstellung überführbar ist, wobei die Führungskanäle in den Führungsschienen ausgebildet sind.

13. Fahrzeugtür (1) nach einem der Ansprüche 1 bis 12, **dadurch gekennzeichnet, dass** die Führungsschienen (22, 28) und die darin geführte verschiebbare Fensterscheibe (4) als Bausatz ausgebildet sind, der von der Fahrzeugaußenseite in die Fahrzeugtür (1) einsetzbar ist.

## Claims

1. A vehicle door (1) with a window opening (3) closeable by means of a slidable window pane (4) wherein the slidable window pane (4) is guided within two guide rails (22, 28) so that it can be shifted from a lower open position to an upper closed position in a substantially vertical closing movement and, in the upper closed position, is arranged on all edges flush with the vehicle body (12) surrounding the window opening (3), and wherein the guide rails (22, 28) are designed so that the slidable window pane (4) is moved translationally in the direction from the vehicle interior to the vehicle exterior during the closing movement, wherein
the slidable window pane (4) includes guide pins (20, 27) on both side edges (18, 25) cooperating with the two guide rails (22, 28), at least two guide pins (20, 27) being arranged on at least one of the side edges (18, 25), each being guided in the same guide rail (22, 28), and each guide rail (22, 28) including a guide channel (32, 33) for each of the guide pins (20, 27) guided therein,
**characterized in that**
one of the guide channels (33) is at least partially formed as a recess or groove in the other guide channel (32).

2. The vehicle door (1) according to claim 1, **characterized in that** the guide rails (22, 28) are designed so that the closing movement of the slidable window pane (4) during the shift from the lower open position to the upper closed position takes place completely within the volume defined by an inner side of the vehicle door and an outer side of the vehicle door.

3. Vehicle door (1) according to claims 1 or 2, **characterized in that** the slidable window pane (4) includes a respective overmold (19, 26) on both side edges (18, 25) to which the guide pins (20, 27) are fastened.

4. The vehicle door (1) according to any one of claims 1 to 3, **characterized in that** each of the guide channels (32, 33) includes an upper end portion (38, 39) facing an upper edge of the vehicle door (1) and that the upper end portions (38, 39) of the guide channels (32, 33) at least partially extend in the horizontal direction.

5. The vehicle door (1) according to any one of claims 1 to 4, **characterized in that** one of the two guide pins (20) arranged on the same side edge (18, 25) of the slidable window pane (4) is guided in a carriage (21, 47), wherein the carriage (21, 47) cooperates with the corresponding guide rail (22, 28) and has an oblong hole (49) in which the guide pin (20) is guided.

6. The vehicle door (1) according to claim 5, **characterized in that** the guide pin (20) guided in the oblong hole (49) of the carriage (21, 47) is also guided in a guide channel (33) of the corresponding guide rail (22, 28).

7. The vehicle door (1) according to claims 5 or 6, **characterized in that** the carriage (21, 47) includes guide contours (53.1, 53.2, 54.1, 54.2, 55) cooperating with guide channels (32, 34, 35) in the guide rails (22, 28).

8. The vehicle door (1) according to any one of claims 5 to 7, **characterized in that** each guide rail (22, 28) includes at least three guide channels (32, 34, 35) and each carriage (21, 47) includes three guide contours (53.1, 53.2, 54.1, 54.2, 55), wherein the guide contours (53.1, 53.2, 54.1, 54.2, 55) interact with a respective one of the guide channels (32, 34, 35) of the guide rail (22, 28).

9. The vehicle door according to any one of claims 5 to 8, **characterized in that** each of the carriages (21, 47) is coupled with a window lift mechanism.

10. Vehicle door (1) according to any one of claims 1 to 9, **characterized in that** a door well (6) is formed in the vehicle door (1), in which the slidable window pane (4) is arranged at least in the lower open position, wherein the door well (6) includes on its side facing the window opening (3), an inner door well seal (9) and an outer door well seal (8) which abut on different sides of the slidable window pane (4).

11. The vehicle door (1) according to any one of claims 1 to 10, **characterized in that** a circumferential seal (11, 17, 23, 29) is arranged on the window opening (3), against which the slidable window pane (4) abuts in the upper closed position, the height of the seal (11, 17, 23, 29) increasing in the direction from the vehicle interior to the vehicle exterior.

12. The vehicle door according to any one of claims 1 to 11, further comprising a sunshade which can be shifted from a lower open position to an upper closed position in a substantially vertical closing movement by means of guide elements guided in guide channels, the guide channels being formed within the guide rails.

13. The vehicle door (1) according to any one of claims 1 to 12, **characterized in that** the guide rails (22, 28) and the slidable window pane (4) guided therein are designed as a kit which can be inserted into the vehicle door (1) from the vehicle exterior.

## Revendications

1. Porte de véhicule (1) comprenant une ouverture de fenêtre (3) pouvant être fermée par une vitre de fenêtre coulissante (4), dans laquelle la vitre de fenêtre coulissante (4) est guidée dans deux rails de guidage (22, 28) de telle sorte que dans un mouvement de fermeture s'étendant essentiellement verticalement, elle peut être transférée d'une position d'ouverture inférieure à une position de fermeture supérieure et, dans la position de fermeture supérieure, est agencée sur tous les bords affleurants de la carrosserie de véhicule (12) entourant l'ouverture de fenêtre (3), et dans laquelle les rails de guidage (22, 28) sont conçus de telle sorte que la vitre de fenêtre coulissante (4) est déplacée en translation vers le côté extérieur du véhicule pendant le mouvement de fermeture en direction de l'intérieur du véhicule, dans laquelle
la vitre de fenêtre coulissante (4) présente sur les deux bords latéraux (18, 25) des goupilles de guidage (20, 27) qui coopèrent avec les deux rails de guidage (22, 28), dans laquelle au moins deux goupilles de guidage (20, 27) sont agencées sur au moins l'un des bords latéraux (18, 25), qui sont guidées respectivement dans le même rail de guidage (22, 28) et chaque rail de guidage (22, 28) présente un canal de guidage (32, 33) pour chacune des goupilles de guidage (20, 27) qui y sont guidées, **caractérisée en ce que**
l'un des canaux de guidage (33) est réalisé au moins partiellement sous la forme d'un évidement ou d'une rainure dans l'autre canal de guidage (32).

2. Porte de véhicule (1) selon la revendication 1, **caractérisée en ce que** les rails de guidage (22, 28) sont conçus de telle sorte que le mouvement de fermeture de la vitre de fenêtre coulissante (4) lors du transfert de la position d'ouverture inférieure à la position de fermeture supérieure se situe entièrement dans le volume situé entre un côté intérieur de porte de véhicule et un côté extérieur de porte de véhicule.

3. Porte de véhicule (1) selon la revendication 1 ou 2, **caractérisée en ce que** la vitre coulissante (4) présente respectivement sur les deux bords latéraux (18, 25) un surmoulage (19, 26) au niveau duquel sont fixées les goupilles de guidage (20, 27).

4. Porte de véhicule (1) selon l'une quelconque des revendications 1 à 3, **caractérisée en ce que** chacun des canaux de guidage (32, 33) présente une zone d'extrémité supérieure (38, 39) tournée vers un bord supérieur de la porte de véhicule (1), et **en ce que** les zones d'extrémité supérieures (38, 39) des canaux de guidage (32, 33) présentent au moins partiellement un contour horizontal.

5. Porte de véhicule (1) selon l'une quelconque des revendications 1 à 4, **caractérisée en ce que** l'une des deux goupilles de guidage (20) qui sont agencées sur le même bord latéral (18, 25) de la vitre de fenêtre coulissante (4) est guidée dans un coulisseau (21, 47), dans laquelle le coulisseau (21, 47) coopère avec le rail de guidage respectif (22, 28) et présente un trou oblong (49) dans lequel la goupille de guidage (20) est guidée.

6. Porte de véhicule (1) selon la revendication 5, **caractérisée en ce que** la goupille de guidage (20) guidée dans le trou oblong (49) du coulisseau (21, 47) est également guidée dans un canal de guidage (33) du rail de guidage (22, 28) correspondant.

7. Porte de véhicule (1) selon la revendication 5 ou 6, **caractérisée en ce que** le coulisseau (21, 47) présente des contours de guidage (53.1, 53.2, 54.1, 54.2, 55) qui coopèrent avec des canaux de guidage (32, 34, 35) dans les rails de guidage (22, 28).

8. Porte de véhicule (1) selon l'une quelconque des revendications 5 à 7, **caractérisée en ce que** chaque rail de guidage (22, 28) présente au moins trois canaux de guidage (32, 34, 35) et chaque coulisseau (21, 47) présente trois contours de guidage (53.1, 53.2, 54.1, 54.2, 55), dans laquelle les contours de guidage (53.1, 53.2, 54.1, 54.2, 55) coopèrent respectivement avec l'un des canaux de guidage (32, 34, 35) du rail de guidage (22, 28).

9. Porte de véhicule selon l'une quelconque des revendications 5 à 8, **caractérisée en ce que** chacun des coulisseaux (21, 47) est relié à un mécanisme de levage de vitre.

10. Porte de véhicule (1) selon l'une quelconque des revendications 1 à 9, **caractérisée en ce qu'**une cage de porte (6) est formée dans la porte de véhicule (1), dans laquelle la vitre de fenêtre coulissante (4) est agencée au moins dans la position d'ouverture inférieure, dans laquelle la cage de porte (6) présente sur son côté tourné vers l'ouverture de fenêtre (3) un joint de cage de porte intérieur (9) et un joint de cage de porte extérieur (8) qui reposent sur différents côtés de la vitre de fenêtre coulissante (4).

11. Porte de véhicule (1) selon l'une quelconque des revendications 1 à 10, **caractérisée en ce qu'**un joint d'étanchéité (11, 17, 23, 29) de forme périphérique est agencé sur l'ouverture de fenêtre (3), sur lequel la vitre de fenêtre coulissante (4) s'appuie dans la position de fermeture supérieure, dans laquelle la hauteur du joint d'étanchéité (11, 17, 23, 29) augmente dans la direction de l'intérieur du véhicule vers le côté extérieur du véhicule.

12. Porte de véhicule selon l'une quelconque des revendications 1 à 11, comprenant en outre une protection solaire des éléments de guidage guidés dans des canaux de guidage dans un mouvement de fermeture s'étendant sensiblement verticalement d'une position d'ouverture inférieure à une position de fermeture supérieure, dans laquelle les canaux de guidage sont formés dans les rails de guidage.

13. Porte de véhicule (1) selon l'une quelconque des revendications 1 à 12, **caractérisée en ce que** les rails de guidage (22, 28) et la vitre de fenêtre coulissante (4) qui y est guidée sont conçus sous la forme d'un kit de montage qui peut être inséré dans la porte de véhicule (1) par le côté extérieur de véhicule.
